# EUROPEAN PATENT APPLICATION

(11) **EP 2 961 133 A1**
(43) Date of publication of application: **30.12.2015**
(21) Application number: 14173688.4
(22) Date of filing: 24.06.2014
(51) Int. Cl.: H04L 29/08, G06F 17/30

(54) **Method for sending data relating to an event from an electronic device to a plurality of terminals in a network**

(71) Applicant: Intellicore Services, 06560 Valbonne Sophia Antipolis (FR)
(72) Inventor: Trotobas, Christian, 06130 Plascassier (FR); Martiquet, Nicolas, 06600 Antibes (FR)
(74) Representative: de Zeeuw, Johan Diederick

(57) **Abstract**

Method for sending data relating to an event from an electronic device to at least one terminal of a plurality of terminals in a network, the at least one terminal comprising a storage means for storing data wherein the data can be used to form a message relating to the event and to allow a user of the terminal to access to said message and wherein a complete set of data needed to form the message and to give access to said message comprises at least a first set of data and a final set of data, the method comprising the steps of:
- identifying a first possible event to occur,
- sending at a first time, prior to the occurrence of the first event, a first set of data relating to the first event to the at least one terminal of said plurality of terminals,
- storing in said storage means of said at least one terminal said first set of data,
- monitoring the occurrence of the first event,
- detecting the occurrence of the first event,
- sending at a time, after the occurrence of the first event, a final set of data relating to the first event to said at least one terminal,
and,
- combining the first set of data relating to the first event, stored in the storage means of the terminal and the final set of data relating to the first event received by the terminal after the occurrence of the first event to generate a message relating to the first event, and,
- allowing access to said message.

## Description

### Field of the Invention

The present invention provides a method for sending data relating to an event from an electronic device in a network (e.g. a server) to at least one terminal of a plurality of terminals in a network, the at least one terminal comprising a storage means for storing data, wherein the data can be used to form a message relating to the event and to allow a user of the terminal to access this message.

The invention also provides a computer program product comprising a computer program code means configured to perform the method according to the invention.

Further, the invention relates to a mobile device comprising processing means and a storage means configured to store a computer program to allow the mobile device to perform the method according to the invention.

The method according to the invention is particularly adapted when operating a network for avoiding capacity problems when sending a large amount of data from an electronic device in a network towards a plurality of terminals in a network.

### Background of the Invention

Networks can be used for sending data from a source, such as an electronic device, to a plurality of terminals which are part of the network. The network could be a network comprising an electronic device and terminals which are physically connected by means of wiring. Alternatively, the network could comprise an electronic device and terminals which are able to communicate wirelessly.

For many applications, the performance of the transmission of data in a network will be dependent firstly on the possibility of the electronic device to send the data towards the terminals and for the terminals to receive the data and secondly on the time needed between the actual sending and the receipt of said data for a given sizing of the network. For many applications, the timespan between sending the data and receipt of the data is critical. If the number of terminals which need to receive the data increases, the capacity of the network will need to increase to forward the data or otherwise the capacity of the network could prove to be too limited to guarantee the receipt of the data within an acceptable timespan.

Where an operator of a network seeks to guarantee a certain maximum timespan between the sending of data and the receipt of the data, one possibility would be to increase the capacity of the network to forward data in the network.

However, if the sending of data is only critical at certain time intervals, the network would be over dimensioned during the remainder of the time, wherein the network is not used for forwarding data or wherein the network is only processing a limited amount of data. A network which is over dimensioned generates costs due to the fact that the operator of the network needs to pay for the full capacity of the network while he uses the capacity of the network only at specific time intervals.

If the operator of a network decides to limit the capacity of the network, the effect may be that at least some of the terminals in the network receive the data in a timespan which exceeds a set and critical maximum time span which is considered acceptable for the transmission of the data from the electronic device to the terminals.

For many applications, short time intervals between the sending and the receipt of data are essential for the value of the data on arrival. An example of such data with a limited life time is data relating to stock prices and trends on the stock exchange. Other examples are specific events that occur, for instance, during a sports event. When the data relates to, for instance, the scoring of a goal in a football match, the message indicating the fact that a goal has been scored should be received at the final destination in a network sufficiently shortly after the actual happening of the event in order for the information to be of value.

If operators of networks for which receipt times are critical do not provide sufficient capacity in a network, users of services which are related to the receipt of the data may not receive the data on time and therefore may not receive the service for which they have paid.

### Summary of the Invention

In view of the observations above, there appears to be a need for an improvement of the operation of a network whereby the operator of a network can limit the capacity of a network and thereby avoid paying costs while guaranteeing receipt times.

### Brief Description of the Invention

The invention provides a method for sending data relating to an event from an electronic device to at least one terminal of a plurality of terminals in a network, the at least one terminal comprising a storage means for storing data, wherein the data can be used to form a message relating to the event and to allow a user of the terminal access to said message and wherein a complete set of data needed to form the message and to give access to said message comprises at least a first set of data and a final set of data, the method comprising the steps of:
- identifying a first possible event to occur,
- sending at a first time, prior to the occurrence of the first event, a first set of data relating to the first event to the at least one terminal of said plurality of terminals,
- storing in said storage means of said at least one terminal said first set of data,
- monitoring the occurrence of the first event,
- detecting the occurrence of the first event,
- sending at a time, after the occurrence of the first event, a final set of data relating to the first event to said at least one terminal,
   and,
- combining the first set of data relating to the first event, stored in the storage means of the terminal and the final set of data relating to the first event received by the terminal after the occurrence of the first event to generate a message relating to the first event, and,
- allowing access to said message.

According to the present invention, it is possible that the method further comprises the steps of:
- identifying a second possible event to occur,
- sending at a second time, prior to the occurrence of the second event, a second set of data relating to the second event to the at least one terminal of said plurality of terminals,
- storing in said storage means of said at least one terminal said second set of data,
- monitoring the occurrence of the first or the second event,
- detecting the occurrence of the first or the second event,
- sending at a time, after the detected occurrence of the first or the second event, a final set of data relating to the detected first or the second event to said at least one terminal,
   and,
- combining the first set of data relating to the first event, stored in the storage means of the terminal or the second set of data relating to the second event, stored in the storage means of the terminal with the final set of data relating to the detected first or second event received by the terminal after the occurrence of the first or second event to generate a message relating to the first or second event, and,
- allowing access to said message.

According to the present invention, it is possible that the method comprises the steps of:
- sending at a third time, after the first time, but prior to the occurrence of the first event, a third set of data relating to the first event to the at least one terminal of said plurality of terminals,
- storing in said storage means of said at least one terminal said third set of data,
- monitoring the occurrence of the first event,
- detecting the occurrence of the first event,
- sending at a time, after the occurrence of the first event, a final set of data relating to the first event to said at least one terminal,
   and
- combining the first set of data relating to the first event, stored in the storage means of the terminal, the third set of data relating to the first event, stored in the storage means of the terminal and the final set of data relating to the first event received by the terminal after the occurrence of the first event to generate a message relating to the first event, and
- allowing access to said message.

According to the present invention, it is possible that the step of identifying a possible event to occur comprises the steps of:
- creating a database comprising a number of activities, wherein each of said activities is related to the possible occurrence of an event,
- identifying an activity,
- comparing the identified activity with the content of the activities database,
- if the activity is listed in the activities database, selecting a related possible event to occur, and
- preparing and/or selecting a first set of data relating to the first possible event to occur.

According to the present invention, it is possible that the method comprises, after the step of preparing and/or selecting a first set of data relating to the first possible event to occur and prior to the step of sending at a first time, prior to the occurrence of the first event, a set of data, the steps of:
- using the prepared and/or selected data to generate at least a first part of a first message, and
- sending the at least first part of the first message to the at least one terminal in the network.

According to the present invention, it is possible that the method comprises, after the step of sending at a time, after the occurrence of the first event, a final set of data relating to the first event to said at least one terminal,
- using the data received on the terminal and stored in the storage means to generate at least a first message.

According to the present invention, it is possible that the method comprises the steps of:
- providing a network with an electronic device and at least one terminal adapted to communicate with said electronic device using a communication protocol, such as IP Based protocols, or comparable protocols.

According to the present invention, it is possible that the at least one terminal is a mobile device, such as a mobile telephone or a smartphone.

According to the present invention, it is possible that the electronic device is a server.

According to the present invention, it is possible that the computer program product comprising computer program code means is configured to perform the method of the invention when executed.

According to the present invention, it is possible that the at least one terminal comprises:
- a processing means, and
- a storage means configured to store the program code of the computer program product according to the invention for access by the processing means.

According to the present invention, it is possible that the storage means is located in the network (cloud based storage), and that the at least one terminal accesses this storage means via the network.

According to the present invention, it is possible that the mobile device comprises is a mobile phone.

### Brief Description of the Drawings

The invention will be better understood after the description which follows and which makes reference to:

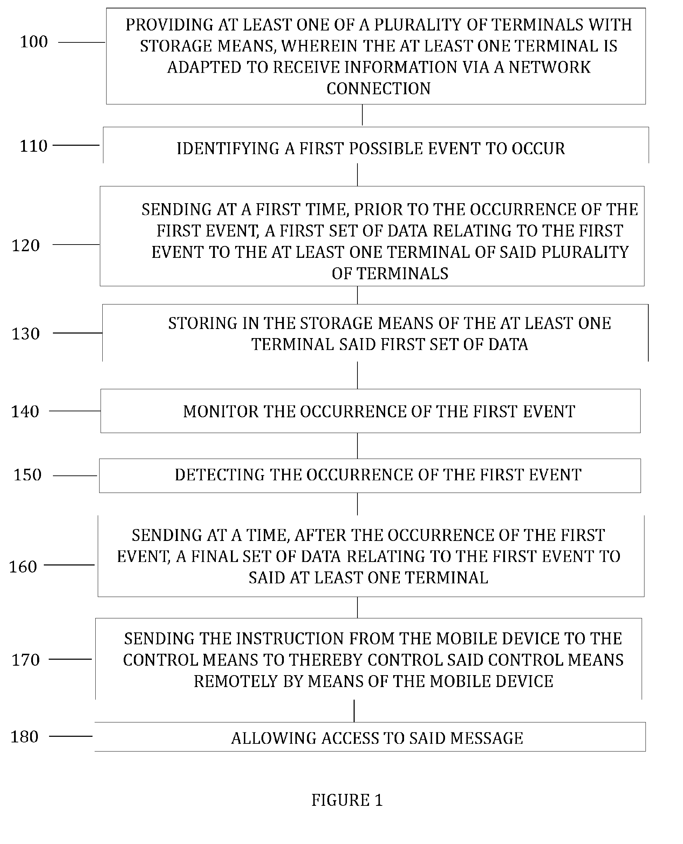

- Figure 1 which shows, in the form of a flow chart, the method according to the present invention.

### Detailed Description of the Invention

According to the present invention, in a first step, at least one of a plurality of terminals is provided with storage means, wherein said at least one terminal is adapted to receive information via a network connection.

In the present text, the word "terminal" is used to indicate a device which can communicate with other electronic devices via a network connection.

Such a network would normally comprise at least one electronic device, for instance a server which could be used as the centre of the network and which could be used for sending messages from said electronic device towards terminals. The network would also comprise a plurality of terminals, each of those to be used by individual users.

According to the invention, the network could be a physical network comprising wiring or could have the form of a wireless network, or could be hybrid with wired and wireless parts, wherein the electronic device and the terminals used in a network could communicate via any communication protocols.

The method, according to the present invention, is specifically adapted to send a large amount of data from an electronic device, used as a source in the network, towards a plurality of terminals. If the electronic device sends out a large amount of data to each of the terminals in the plurality of terminals, the time between sending of the data and receipt of the data by each of the terminals is determined by the size of the data to be sent to the terminals and by the capacity of the network to transfer data from the electronic device towards each of the terminals.

In case the delivery time of data is essential for proper functioning of the network, the operator of the network could choose to dimension the network connections such that, should a large amount of data be sent out to the plurality of terminals, the data can be sent and received within an acceptable time frame. However, a network having a large capacity is normally relatively expensive. Moreover, if a large amount of data is only sent in a fraction of the operational time of the network, the network is not used and is clearly over dimensioned in the time period between two sendings of said large amounts of data.

The method according to the present invention is shown in Figure 1. In the first step 100, at least one of the plurality of terminals is provided with local or remote storage means, the at least one terminal being adapted to receive information via a network connection.

It should be noted that the terminals could comprise a storage means which is physically part of the terminal. Alternatively, the terminals could be connected to remote storage means for storing data received via the network connection. It is possible that said storage means are located in the network (Cloud based solutions) and that said terminal accesses said storage means via the network.

In a second step 110 of the method, a first possible event to occur is identified by the electronic device in the network.

In a third step 120 of the method, at a first instance, prior to the occurrence of the first event, a first set of data related to said first event is sent to at least one terminal of said plurality of terminals. It will be understood that the larger the amount of terminals that are supposed to receive the first set of data within a certain time limit after the start of the sending of the data, the larger the amount of data that should be forwarded via the network connection.

In a fourth step 130 of the method, the first set of data is stored in the storage means of the at least one terminal, and the storage means of all other terminals which have received the first set of data.

In a fifth step 140 of the method, it is monitored whether the first event occurs.

The detection of the actual occurrence of the first event is done in a sixth step 150.

Following the occurrence of the first event, in a seventh step 160 of the method, at a time, after the occurrence of the first event, a final set of data relating to the first event will be sent to said at least one terminal and possibly to other terminals in the network.

In the eighth step 170 of the method, the first set of data that was received by the at least one terminal, prior to the occurrence of the first event and which was stored in the storage means of the terminal, and a final set of data, the sending of which was linked to the actual occurrence of the first event, are combined to generate a message relating to the first event.

In the final ninth step 180 of the method, the message that has been generated on the terminal is made accessible for the user of the terminal.

The above described method is specifically adapted for sending messages relating to possible events to a large number of subscribers of a specific service when the subscribers are each provided with a terminal and are each connected to the network operating the method according to the invention.

As an example, in the following paragraphs, practical use of the method of the present invention will be described.

Several operators offer services relating to sports events to their clients. One of these services might be the sending of a message in a form of, for instance, an email, an SMS message, a widget in a mobile application or other message which can be sent to the subscribers of the service once a specific event occurs in the sports event. When the sports event is a football match, the event of interest might be the scoring of a goal.

In the remainder of this example, reference is made to a football match.

If, during the football match, one of the two teams scores a goal, the operator of the service needs to send the message "Player 8 of Team A has scored a goal with his head during the 44^{th} minute, after a corner shot by Player 10" to all the subscribers of the service.

For this specific use, it will be understood that the time interval between the scoring of the goal and the receipt of the message that a goal has been scored must be short. If the time frame between the actual occurrence of the event and the receipt of the message exceeds a certain maximum timespan, the value of receiving the message decreases and may even become null.

The service of receiving an alert relating to a sports event can, for instance, be of interest to users of a terminal who are otherwise occupied and who want to follow, as much as they can, a sports match in live. If they receive an alert that an event is happening, they can give their attention to another medium, for instance a television, to actually see the event happening. In this manner, the user of the service may spend only a few minutes watching the sports game and see all the highlights in real time.

Another use of the mentioned service of highlighting events in a sports event is when end users wish to participate in an exchange of comments and discussions on the Internet, for instance users who are active on a social network on the Internet and would like to exchange messages, for instance, using communication means such as Twitter.

Betting is another situation where the mentioned service of highlighting events in a sports event is important.

According to the invention, a look-up table could be used which comprises a series of possible events to occur. Linked to each of the possible events to occur, a message could be identified which could be used to inform end users of the occurrence of the event.

In a first possible use according to the invention the look-up table could be used once a first possible event to occur has been identified. The look-up table would provide the message which is related to the first event and which needs to be sent to the end users to inform those end users of its occurrence.

The message to be sent could be compared to a standard letter, wherein part of the message is missing. In the specific example of a football match, the first possible event to occur could be the scoring of a goal by Team A. The look-up table could comprise in its list with related messages the following text:
*"Player* (*?*) *of Team A has scored a goal with his* (?) *during the* (?) *minute, after a* (?) *shot by Player (?)"*.

Prior to the occurrence of the event, the standard message with the missing parts could be sent out to a plurality of terminals. On occurrence of the first possible event, the only information which needs to be sent out to complete the message could be:
"(8) (head) (44^{th}) (corner) (10)"

Thus, the major part of the final message could be sent out to the terminals before the occurrence of the event. The sending and receipt of this first part is not time-critical. Only a small part of final message could be sent out after the occurrence of the event, the receipt of which is time-critical.

In a further use of the invention, the occurrence of a limited number of events to occur could be prepared by sending to the terminals a related number of standard messages. On occurrence of the event, only the missing information of the event that actually happened could be sent out to complete the message.

In a yet further use of the invention, the identification of a possible event to occur could be linked to the occurrence of a related preliminary event. For instance, if Team A is awarded a corner or a penalty, the chances of Team A scoring a goal increase. A look-up table could be used with preliminary events listed and related possible events that could occur in the continuation of the preliminary event.

If a preliminary event occurs, a possible event to occur could be identified and the occurrence of the possible event could be prepared in the manner described above.

A second example of the use of the method according to the present invention is the sending of data relating to events which need to be received by a terminal of an end user almost instantly in order to avoid the data being rendered useless. Such use is, for instance, a service which prepares and sends messages relating to movements of shares on the stock exchange. Where an end user wishes to follow events happening at the stock exchange, for instance, an increase or a decrease of the value of a specific product (share price, price of stock options, etc.), any fluctuation of such a value should be communicated instantly.

Where the operator of a network does not use the method of the present invention and uses a network with a relatively limited capacity, the risk would be that the end user receives the information on the terminal after an unacceptably long time frame. That means that at the moment the end user receives the information about a certain product on his terminal, the information is already obsolete because of the delay between the sending of the message and the receipt of said message on the terminal of the end user.

It will be understood that, in the description, a few examples are given of the potential use of the method according to the present invention. Other uses will be apparent for a skilled person and will be within the scope of the appending claims.

## Claims

1. A method for sending data relating to an event from an electronic device to at least one terminal of a plurality of terminals in a network, the at least one terminal comprising a storage means for storing data wherein the data can be used to form a message relating to the event and to allow a user of the terminal to access to said message and wherein a complete set of data needed to form the message and to give access to said message comprises at least a first set of data and a final set of data, the method comprising the steps of:
- identifying a first possible event to occur,
- sending at a first time, prior to the occurrence of the first event, a first set of data relating to the first event to the at least one terminal of said plurality of terminals,
- storing in said storage means of said at least one terminal said first set of data,
- monitoring the occurrence of the first event,
- detecting the occurrence of the first event,
- sending at a time, after the occurrence of the first event, a final set of data relating to the first event to said at least one terminal,
and,
- combining the first set of data relating to the first event, stored in the storage means of the terminal and the final set of data relating to the first event received by the terminal after the occurrence of the first event to generate a message relating to the first event, and,
- allowing access to said message.

2. The method according to claim 1, wherein the method further comprises the steps of:
- identifying a second possible event to occur,
- sending at a second time, prior to the occurrence of the second event, a second set of data relating to the second event to the at least one terminal of said plurality of terminals,
- storing in said storage means of said at least one terminal said second set of data,
- monitoring the occurrence of the first or the second event,
- detecting the occurrence of the first or the second event,
- sending at a time, after the detected occurrence of the first or the second event, a final set of data relating to the detected first or second event to said at least one terminal,
and,
- combining the first set of data relating to the first event, stored in the storage means of the terminal or the second set of data relating to the second event, stored in the storage means of the terminal with the final set of data relating to the detected first or second event received by the terminal after the occurrence of the first or second event to generate a message relating to the first or second event, and,
- allowing access to said message.

3. The method according to claims 1 or 2, wherein the method comprises the steps of:
- sending at a third time, after the first time, but prior to the occurrence of the first event, a third set of data relating to the first event to the at least one terminal of said plurality of terminals,
- storing in said storage means of said at least one terminal said third set of data,
- monitoring the occurrence of the first event,
- detecting the occurrence of the first event,
- sending at a time, after the occurrence of the first event, a final set of data relating to the first event to said at least one terminal,
and
- combining the first set of data relating to the first event, stored in the storage means of the terminal, the third set of data relating to the first event, stored in the storage means of the terminal and the final set of data relating to the first event received by the terminal after the occurrence of the first event to generate at least one message relating to the first event, and
- allowing access to said at least one message.

4. The method according to any of the preceding claims, wherein the step of identifying a possible event to occur comprises the steps of:
- creating a database comprising a number of activities, wherein each of said activities is related to the possible occurrence of an event,
- identifying an activity,
- comparing the identified activity with the content of the activities database,
- if the activity is listed in the activities database, selecting a related possible event to occur, and
- preparing and/or selecting a first set of data relating to the first possible event to occur.

5. The method according to claim 4, wherein the method comprises, after the step of preparing and/or selecting a first set of data relating to the first possible event to occur and prior to the step of sending at a first time, prior to the occurrence of the first event a set of data, the steps of:
- using the prepared and/or selected data to generate at least a first part of a first message, and
- sending the at least first part of the first message to the at least one terminal in the network.

6. The method according to claim 5, wherein the method comprises, after the step of sending at a time, after the occurrence of the first event, a final set of data relating to the first event to said at least one terminal,
- using the data received on the terminal and the at least first part of the first message stored in the storage means to generate at least a first message.

7. The method according to any of the preceding claims, wherein the method comprises the steps of:
- providing a network with an electronic device source and at least one terminal adapted to communicate with said electronic device using a communication protocol, such as IP based protocols or comparable protocols.

8. The method according to any of the preceding claims, wherein the at least one terminal is a mobile device, such as a mobile telephone or a smartphone.

9. The method according to any of the preceding claims, wherein the electronic device is a server.

10. A computer program product comprising computer program code means configured to perform the method of claim 1 when executed.

11. A mobile device comprising:
- a processing means, and
- a storage means configured to store the program code of claim 10 for access by the processing means.

12. The mobile device of claim 11, wherein the mobile device comprises a mobile phone.
